# EUROPÄISCHE PATENTSCHRIFT

(11) **EP 1 489 519 B1**
(45) Veröffentlichungstag und Bekanntmachung des Hinweises auf die Patenterteilung: **11.01.2017**
(21) Anmeldenummer: 04012137.8
(22) Anmeldetag: 21.05.2004
(51) Int. Cl.: G06F 12/08

(54) **Massenspeichereinrichtung und Verfahren zum Betrieb einer Massenspeichereinrichtung**
Mass memory and method to operate a mass memory
Mémoire de masse et méthode d'opération d'une mémoire se masse

(30) Priorität: 20.06.2003 DE 10327955
(43) Veröffentlichungstag der Anmeldung: 22.12.2004
(73) Patentinhaber: Fujitsu Technology Solutions Intellectual Property GmbH, 80807 München (DE)
(72) Erfinder: Depta, Robert, 86179 Augsburg (DE)
(74) Vertreter: Epping - Hermann - Fischer

(56) Entgegenhaltungen:
- WO-A1-99/17208
- US-A- 5 819 054
- US-A- 6 134 624
- US-A1- 2002 078 292
- US-B1- 6 516 390

## Beschreibung

Die Erfindung betrifft eine Massenspeichereinrichtüng mit mehreren Massenspeichern und mit zumindest zwei Bridgecontrollern, die über einen Datenbus physikalisch mit den Massenspeichern verbunden sind. Die Erfindung betrifft weiterhin ein Verfahren zum Betrieb einer Massenspeichereinrichtung mit mehreren Massenspeichern und mit zumindest zwei Bridgecontrollern, über die die Massenspeicher ansprechbar sind.

Derartige Massenspeichereinrichtungen sind bekannt. Sie weisen eine Vielzahl an Massenspeichern, meist Festplatten, auf sowie Komponenten, wie beispielsweise Buscontroller und Bridgecontroller, die die Mässenspeicher verwalten und die internen bzw. externen Datenübertragungen aufgrund der Anforderung von Servern, die an die Massespeichereinrichtungen über ein Hostinterface angeschlossen sind, steuern. Die Massenspeichereinrichtungen sind in der Regel in einem Gehäuse einer Standardgröße, meist in sogenannten 19" Geräteschränken, eingesetzt.

Aus der US 5,819,054 A ist ein Speicher-System bekannt, bei dem ein Host über einen gemeinsamen Bus mit einer Massenspeichereinheit verbunden ist. Der Host kommuniziert mit einem Host Adaptor, der die Daten in einem gemeinsamen Cachebereich speichert und gleich den Vorgang als geschrieben an den Host quittiert. Die Daten werden später aus dem Cachebereich von einem "disk adaptor" geholt und auf die Festplatten geschrieben.

Ein ähnliches Speicher-System ist aus der US 2002/078292 A1 bekannt. Anstatt einem gemeinsamen Bus wurde hier ein Point-to-Point Anschluss zwischen dem Host Adaptor und dem zentralen Cache-Speicher verwendet.

Aus der US 6,516,390 ist ein Datenspeichersystem mit Front-End- und Back-End-Schaltkreisen bekannt, die mit einem oder mehreren Datenspeichern verbunden sind. In einem Ausführungsbeispiel sind die Schaltkreise über eine Point-to-Point Verbindung mit einem gemeinsamen Cache verbunden, um die Busse des Systems zu entlasten.

Aus der WO99/17208 ist ein Speichersystem mit mehreren "Storage Controller" bzw. "RAID Controller" bekannt, die über eine Bussystem eine Vielzahl von Massenspeichern verwalten. Die Controller nutzen einen intelligenten zentralen Cache, der ebenfalls an das Bussystem angeschlossen ist und in einer Ausführungsform mit einem weiteren, redundanten (gespiegelten) Cache verbunden ist.

Die Gesamtspeicherkapazität einer Massenspeichereinrichtung ist bestimmt durch die Abmaße des Gehäusekäfigs und der innerhalb des Gehäusekäfigs angeordneten Anzahl an Massenspeichern. Somit richtet sich die Anzahl der innerhalb des Gehäusekäfigs integrierbaren Massenspeicher nach der Größe der Massenspeicher selbst. Eine fortschreitende Weiterentwicklung der Massenspeicher erzielt kleinere physikalische Abmaße bei größer werdender Kapazität.

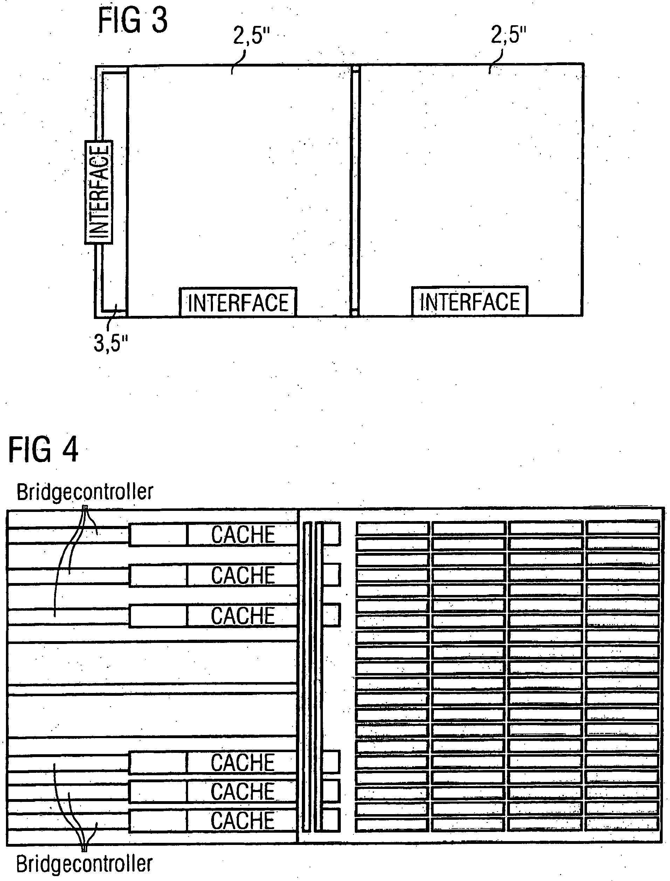

Die steigenden Anforderungen der Server an Speicherkapazität bedingen die Bereitstellung weiterer Massenspeichereinrichtungen oder zumindest einen Umstieg auf Massenspeicher höherer Kapazität. Dies hat zur Folge, daß beispielsweise bei einem Umstieg von 3,5" Festplatten auf 2,5" Festplätten ohne größere mechanische Veränderungen des Gehäusekäfigs die Anzahl der integrierbaren Festplätten, wie in der Figur 3 exemplarisch an einem Einschub eines Gerätekäfigs dargestellt, in einer Massenspeichereinrichtung um ein Vielfaches erhöht werden kann. Vergleicht man die Größe der Massenspeicher relativ zueinander, so ergibt sich, daß der erforderliche Einbauraum einer 3,5" Festplatte bei horizontaler Aufstellung (Interface zum Anschluß an den Festplattenbus links außen) dem Einbauraum von zwei 2,5" Festplatten bei vertikaler Aufstellung (Interface unten) entspricht. Bei gängigen Massenspeichereinrichtuhgen mit 19" Standard-Systemgrößen läßt sich die Anzahl der verfügbaren Festplatten somit von 14 auf mindestens 40 erhöhen.

Die in der externen Massenspeichereinrichtung, also außerhalb eines Serversystems, integrierten Massenspeicher werden nicht direkt über einen Host-Bus Adapter eines Hostsystems angesprochen, sondern sind über die Bridgecontroller verwaltbar und von diesen physikalisch ansprechbar. In einem Enterprise Netzwerk-Umfeld verwendet man in einer Massenspeichereinrichtung in der Regel aus Gründen der Redundanz für die verwendete Systemkonfiguration und der Anzahl zu verwaltender Mässenspeicher zwei Bridgecontroller. Dabei sind die Bridgecontroller in Abhängigkeit ihrer Konfiguration unterschiedlich betreibbar.

In einer "active-active"-Konfiguration sind beide Bridgecontroller aktiv geschaltet, so daß für beide Bridgecontroller ein Zugriff auf alle in der Mässenspeichereinrichtung integrierten Massenspeicher ermöglicht ist. In dieser Konfiguration sind die beiden Bridgecontroller zu verschiedenen Servern verbindbar, so daß mehrere Server physikalisch auf einen gemeinsamen Massenspeicher-Pool zugreifen können und somit einem Server größere Speicherressourcen zuteilbar sind.

In einer "active-passive"-Konfiguration ist immer nur ein Bridgecontroller gegenüber dem Hostsystem aktiv und greift auf alle Massenspeicher zu. Der zweite Bridgecontroller befindet sich als Reservesystem in einem inaktiven Status und wird erst bei einem Ausfall des aktiven Bridgecontrollers selbst aktiviert. Sind in einer Masseaspeichereinrichtung mehr als zwei Bridgecontroller verfügbar, können diese auch in einer gemischten Konfiguration betrieben werden.

Das Abspeichern abzuspeichernder Daten auf den Massenspeichern aufgrund einer Anforderung eines mit der Massenspeichereinrichtung verbundenen Servers kann über die Bridgecontroller auf zwei verschiedene Arten erfolgen:
- in einem sogenannten "Write-Back-Modus" werden abzuspeichernde Daten zuerst in einen innerhalb des Bridgecontrollers angeordneten Speicherbereich (Cache) geschrieben und unmittelbar anschließend das erfolgreiche Speichern an den Server (Host) bestätigt; das Schreiben der Daten auf die Massenspeicher erfolgt jedoch zu einem späteren Zeitpunkt, beispielsweise sobald die entsprechenden Massenspeicher diese Daten aufnehmen können, oder
- in einem sogenannten "Write-Through-Modus" werden abzuspeichernde Daten direkt auf die Massenspeicher geschrieben; anschließend erfolgt die Quittierung an den Server.

Im "Write-Back-Modus" sind die abzuspeichernden Daten für einen bestimmten Zeitraum nur im Data-Cache-Speicherbereich der Bridgecontroller vorhanden. Deshalb ist es besonderes wichtig, beispielsweise im Fall eines Stromausfalls, diesen Speicherbereich gegen Datenverluste abzusichern. Hierzu wird in der Regel jeder Bridgecontroller mit einer BBU-Einheit (Battery Backup Unit) versehen.

Bei einer "active-active" bzw. "active-passive"-Konfiguration eines ersten und weiteren Bridgecontrollers mit konfiguriertem "Write-Back-Modus" werden die abzuspeichernden Daten erst in den Speicherbereich des für diese. Datentransaktion aktiven Bridgecontrollers geschrieben. Damit im Falle einer Fehlfunktion des ersten Bridgecontröllers der weitere Bridgecontroller die volle Funktionalität transparent und unterbrechungsfrei übernehmen kann, müssen die Dateninhalte in den Speicherbereichen der beiden Bridgecontroller kohärent gehalten werden. Dies erfordert eine permanente Synchronisation der Inhalte der Speicherbereiche, die sogenannte Cache-Coherency. Diese sogenannte Cache-Synchronisation erfolgt normalerweise über einen Datenbus, meistens den FC- (Fibre Channel) oder SCSI-(Small Computer System Interface) Festplattenbus.

Massenspeichereinrichtungen deren Festplattendatenbus zum Beispiel auf der SAS- (Serial Attached SCSI) oder auf der Serial-ATA-Technologie basiert, müssen, auf der Ebene einer Steckersignalvereinbarung in Richtung Festplattenbackplane einen dedizierten Kanal für die Synchronisation der Dateninhalte der Speicherbereiche der ersten und weiteren Bridgecontroller reservieren bzw. aufbauen. Hierdurch ist zwar eine Standardisierung bezüglich der internen Bridgecontroller-Interfaces möglich, derzeitige Normalisierungsbestrebungen, wie zum Beispiel SATA II, konzentrieren sich jedoch nur auf die Interfaces zwischen zwei in einer Massenspeichereinrichtung angeordneten Bridgecontroller.

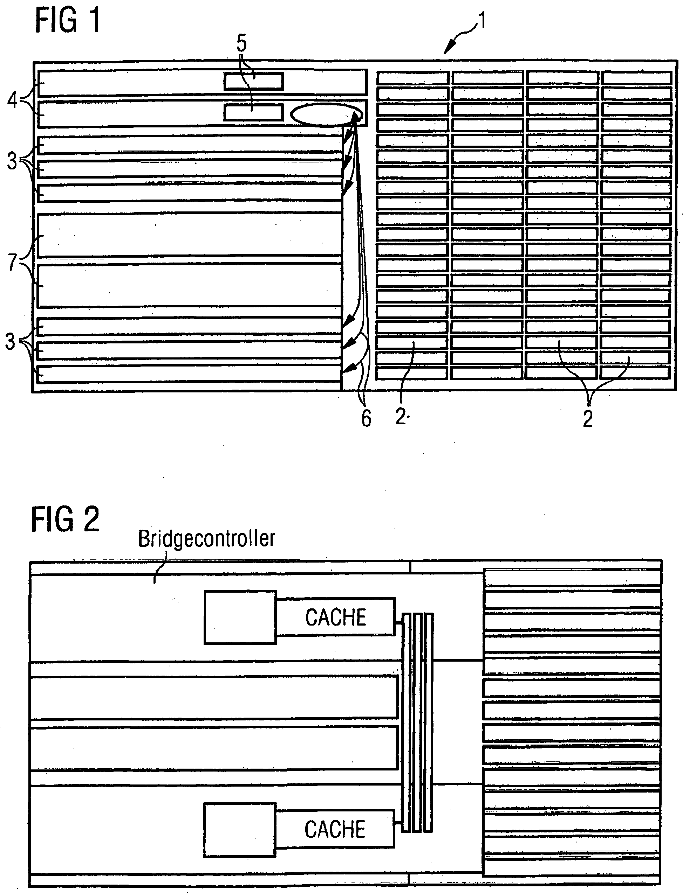

Figur 2 zeigt eine bekannte Anordnung einer Massenspeichereinrichtung. Die in der Massenspeichereinrichtung integrierten Massenspeicher sind von den beiden Bridgecontrollern ansprechbar. Die Bridgecontroller weisen einen internen Cache-Speicherbereich auf, in den bei einer "Write-Back-Modus" Konfiguration abzuspeichernde Daten geschrieben werden. Über ein Bussystem, in der Regel der Festplattenbus, erfolgt die Synchronisation der Dateninhalte der Speicherbereiche.

Sind in einer Massenspeichereinrichtung, wie in der Figur 4 gezeigt, eine Vielzahl an Bridgecontrollern zur Verwaltung von Massenspeichern vorgesehen, synchronisieren alle Bridgecontroller entweder über den Festplattenbus oder über einen dedizierten Cache-Coherency-Channel die Dateninhalte und Datenstatus ihrer Cache-Speicherbereiche sowohl beim Schreiben auf die Massenspeicher als auch beim Lesen aus den Massenspeichern. Es liegt ein wesentlich erhöhter Datenverkehr vor, der ein mehrfaches der Gesamtbandbreite des an der Massenspeichereinrichtung angeordneten Hostinterfaces zum Anschluß von Servern aufweist.
Weiterhin muß zum Schutz gegen Datenverluste im Falle eines Stromausfalls für jeden Bridgecontroller eine BBU vorgesehen werden, die zum einem weitere Kosten verursacht und zum anderen, insbesondere bei externen Systemen, weiteren Einbauraum in der Massenspeichereinrichtung benötigt.

Der Erfindung liegt daher die Aufgabe zu Grunde, eine Massenspeichereinrichtung und ein Verfahren zum Betrieb einer Massenspeichereinrichtung anzugeben, die die oben genannten Nachteile nicht aufweist.

Die Aufgabe wird erfindungsgemäß durch eine Massenspeichereinrichtung mit mehreren Massenspeichern und mit zumindest zwei Bridgecontrollern zum Verbinden der Massenspeichereinrichtung mit jeweils einem Server gelöst, wobei jeder der Bridgecontroller über einen Festplattenbus physikalisch mit allen Massenspeichern der Massenspeichereinrichtung verbunden sind. Dabei ist in der Massenspeichereinrichtung eine erste gemeinsame Cache-Speichereinheit vorgesehen, mit der die Bridgecontroller zum Abspeichern abzuspeichernder Daten und deren Stati auf die Massenspeichereinheiten über ein zusätzliches Cache-Synchronisationssystem der Massenspeichereinrichtung in Form eines von dem Festplattenbusses separaten Datenbusses verbunden sind. Dabei sind die Bridgecontroller über das Cache-Synchronisationssystem sternförmig an die erste Cache-Speichereinheit angebunden und dazu eingerichtet, in einem "Write-Back-Modus" zu arbeiten und die abzuspeichernden Daten über den separaten Datenbus in die gemeinsame Cache-Speichereinheit zu schreiben, der für jeden Bridgecontroller eine Einzel-Verbindung, eine sogenannte Point-to-Point Verbindung, zu der Cache-Speichereinheit aufweist.

Weiterhin wird die Aufgabe durch ein Verfahren gemäß Anspruch 7 gelöst, bei dem unter anderem zu speichernde Daten auf einer ersten gemeinsamen Cache-Speichereinheit abgespeichert werden und die in der ersten gemeinsamen Cache-Speichereinheit gespeicherten Daten anschließend auf die Massenspeicher geschrieben werden.

In der Massenspeichereinrichtung ist für alle Bridgecontroller eine gemeinsame Speichereinheit vorgesehen, so daß die einzelnen Bridgecontroller keine eigenen internen Cache-Speicherbereiche, die für die Cache-Coherency-Datenoperationen notwendig sind, aufweisen. Die einzelnen Bridgecontroller arbeiten immer im "Write-Back-Modus" und schreiben abzuspeichernde Daten über einen separaten Datenbus in die gemeinsame Cache-Speichereinheit. Dieser separate Datenbus, das Cache-Synchronisationssystem, weist für jeden Bridgecontroller eine Einzel-Verbindung, eine sogenannte Point-to-Point Verbindung, zur Cache-Speichereinheit auf und ist als passive Backplane-Verbindung beispielsweise als eine mehrfache Differential-Pair Verbindung (XAUI, PCI-Express), auf der die Bridgecontroller verbindende Backplane, realisiert. Das Cache-Synchronisationssystem bzw. eine Einzel-Verbindung kann auch als eine optische Verbindung implementiert sein. In Abhängigkeit der Anzahl der an die Cache-Speichereinheiten zu verbindenden Bridgecontroller ermöglicht die Interface-Technologie der Speichereinheiten eine Verbindung mittels Switch-Fabric-Routing oder Shared-Bus-Topologie. Diese Topologien sind einem Fachmann weitreichend bekannt und werden hier nicht weiter ausgeführt.

Die Erfindung sieht eine weitere Cache-Speichereinheit vor, die über eine separate Verbindung mit der ersten Speichereinheit zur Synchronisation der Cache-Speichereinheiten-Inhalte verbunden ist. Beim Ausfall einer Komponente sind die Daten der Cache-Speicherinhalte kohärent, so daß transparent eine Übernahme durch die weitere verbleibende Cache-Speichereinheit erfolgt.

Die Verwaltung dieser ausgelagerten gemeinsamen Speichereinheiten ist aufgrund einer Einbindungsmöglichkeit in eine Speichersubsystem-Verwaltung wesentlich vereinfacht durchführbar.

Besonders vorteilhaft erweist sich die Ausgestaltung der Cache-Speichereinheit als modulares System, welches eine bestimmte Anzahl an Speichermodule aufweist. In einfacher Weise kann die Speicherkapazität der Speichereinheiten durch Stecken weiterer Speichermodule vergrößert oder durch Entfernen von Speichermodule verkleinert werden. Fehlerhafte Module können auf einfache Weise im laufenden Betrieb ausgetauscht werden.

Den Cache-Speichereinheiten sind zur Absicherung gegen Datenverluste bei einem Stromausfall BBU's zugeordnet. Bisherige den Bridgecontrollern zugeordnete BBU's entfallen, da zu speichernde Daten ausschließlich in die Speichereinheiten geschrieben werden. Somit können bei Massenspeichereinrichtungen mit mehreren Bridgecontrollern bei steigender Zuverlässigkeit des Systems erhebliche Kosten sowie Einbauraum eingespart werden.

Durch die Verwendung zentraler gemeinsamer Cache-Speichereinheiten können die internen Speicher der Bridgecontroller auf ein Minimum reduziert werden.

Weitere Einzelheiten und Ausgestaltungen der Erfindung sind in den Unteransprüchen angegeben.

Die Erfindung wird nachfolgend anhand eines konkreten Ausführungsbeispiels unter Berücksichtigung der Figur 1 näher erläutert.

In den Figuren zeigen:
- Figur 1: ein Ausführungsbeispiel der Erfindung,
- Figur 2: eine bekannte Anordnung einer Massenspeichereinrichtung,
- Figur 3: Größenverhältnisse bekannter Massenspeicher und
- Figur 4: eine weitere bekannte Anordnung einer Massenspeichereinrichtung.

In der Figur 1 ist eine erfindungsgemäße Ausführungsform einer Massenspeichereinrichtung dargestellt. Eine Massenspeichereinrichtung 1 weist eine Vielzahl an vertikal aufgestellten 2,5" Massenspeichern 2 auf sowie mehrere Bridgecontroller 3, die über einen hier nicht dargestellten Festplattenbus die Massenspeicher 2 ansprechen und verwalten. In der Massenspeichereinrichtung 1 sind weiterhin eine erste und eine weitere Cache-Speichereinheit 4 angeordnet, die jeweils eine integrierte BBU 5 aufweisen. Zur Anbindung der Bridgecontroller 3 an die Cache-Speichereinheiten 4 verfügt die Massenspeichereinrichtung 1 ein separates Cache-Synchronisationssystem 6. Das Cache-Synchronisationssystem 6 umfaßt mehrere ultraschnelle Einzelverbindungen, über die die einzelnen Bridgecontroller 3 sternförmig an die Cache-Speichereinheiten 4 angebunden sind. Um eine große Verfügbarkeit bei Schwankungen der Stromversorgung zu erzielen, sind zwei redundante Stromversorgungen 7 vorgesehen.

Die Bridgecontroller 3 weisen weder interne, private Cache-Speichereinheiten zum Speichern abzuspeichernder Daten noch intern oder extern zugeordnete BBU's auf. Dadurch, daß den Bridgecontrollern 3 eine erste gemeinsame Cache-Speichereinheit 4 zugeordnet ist, werden abzuspeichernde oder zu lesende Daten in die erste gemeinsame Cache-Speichereinheit 4 geschrieben. Erst anschließend erfolgt das Schreiben in die Massenspeicher 2. Die beiden Cache-Speichereinheiten 4 sind über einen hier nicht gezeigten separaten Datenbus verbunden, über den die automatische Cache-Synchronisation der Cache-Speichereinheiten-Inhalte erfolgt. Die Cache-Synchronisation mit den Bridgecontrollern 3 wird in Abhängigkeit einer geforderten Sicherheitsstufe mittels eines sogenannten "Cache-Coherency-Algorithmus, beispielsweise "DRAGON", "MSI", "MESI", "MOESI" etc. durchgeführt. Somit ist bei Ausfall einer der Speichereinheiten 4 eine System-Datenkohärenz der Cache-Speichereinheiten-Inhalte gewährleistet. Eine Übernahme der Cache-Verwaltungsfunktion durch die weitere Cache-Speichereinheit 4 kann im Fehlerfall transparent und unterbrechungsfrei erfolgen.

Die Cache-Speichereinheiten 4 weisen hier nicht dargestellte Speichermodule auf. In einfacher Weise können die Cache-Speichereinheiten 4 bzgl. ihrer Speicherkapazität durch Stecken weiterer Speichermodule oder durch Entfernen bereits eingebauter Speichermodule erweitert oder reduziert werden. Ebenso können die Speichermodule ausgetauscht werden. Beim Entfernen oder Stecken der Cache-Speichermodule oder einer einzelnen Cache-Speichereinheit 4 während des Betriebs, wobei mindestens zwei Cache-Speichereinheiten 4 in der Massenspeichereinrichtung 1 betrieben werden müssen, wird kein sogenannter "Cash-Flush" durchgeführt, so daß die Bridgecontroller 3 in einem "Write-Back-Modus" verbleiben und beim Entfernen einer der Cache-Speichereinheiten 4 die zu speichernden Daten zuerst auf die verbleibende Cache-Speichereinheit 4 geschrieben werden und anschließend auf den Massenspeichern 2 gespeichert werden.

Bei einer Konfiguration mit nur einer Cache-Speichereinheit 4 wird beim Ausfall aufgrund eines Fehlers oder beim Entfernen dieser Cache-Speichereinheit 4 ein "Cash-Flush" durchgeführt und die Bridgecontroller 3 schalten in einem "Write-Through-Modus", bei dem die zu speichernden Daten direkt auf en Massenspeichern 2 abgespeichert werden.

Abzuspeichernde Daten werden in die Cache-Speichereinheiten 4 blockweise mit CRC geschrieben. Bei Ausfall eines Blocks oder bei der Überschreitung eines festgelegten Fehlerniveaus sind die Speichereinheiten 4 in der Lage, die zu speichernden Daten im Hintergrund in einem für diesen Zweck reservierten Block neu abzubilden und zur Verfügung zu stellen.

Die besondere Ausgestaltung der Massenspeichereinrichtung erlaubt insbesondere bei einer "active-active"-Könfiguration der Bridgecontroller, daß alle diese Bridgecontroller zu unterschiedlichen Server verbindbar sind. Dies bewirkt, daß mit steigender Anzahl an Bridgecontrollern mehreren einzelnen Server Zugang zu den großen gemeinsamen Speicherressourcen gewährt werden kann. Ebenso können mehrere Bridgecontroller an eine große Servereinheit angekoppelt werden, um die Massenspeicherzugriffe zu beschleunigen oder separat laufenden Prozessen auch separate Hardware-Datenübertragungskanäle zuzuordnen. Die Möglichkeit mehrere Bridgecontroller an mehreren Servereinheiten anzuschließen, erhöht die Ausfallsicherheit des Gesamtsystems, da der Zugriff auf einen gemeinsamen Datenbestand auch über ein Bridgecontroller-Fail-Over gesichert ist, ohne daß nennenswerte Performanceverluste zu verzeichnen wären.

Auch dadurch, daß die zentralen gemeinsamen Cache-Speichereinheiten ihre Speicherinhalte über einen separaten Datenbus synchronisieren, wird die Performance des Gesamtsystems nicht beeinträchtigt. Erst durch die zentralen Cache-Speichereinheiten und das separate Cache-Synchronisationssystem wird es ermöglicht, eine "active-active" -Konfiguration mit mehreren Bridgecontrollern ohne Performanceeinbußen, aufgrund der im Hintergrund laufenden Cache-Coherency-Prozesse, aufzubauen.

Heutige Systeme arbeiten deshalb nur mit zwei gleichzeitig aktiven Bridgecontrollern, da bei der Verwendung mehrerer Bridgecontroller mit eigenen Cache-Speichereinheiten der Aufwand für die Einhaltung der Cache-Coherency nicht mehr linear mit der Anzahl gleichzeitig arbeitender Bridgeontroller steigt.

### Bezugszeichenliste

- 1: Massenspeichereinrichtung
- 2: Massenspeicher
- 3: Bridgecontroller
- 4: Cache-Speichereinheit
- 5: BBU
- 6: Cache-Synchronisationssystem
- 7: Redundante Stromversorgung

## Patentansprüche

1. Massenspeichereinrichtung (1) mit mehreren Massenspeichern (2) und mit zumindest zwei Bridgecontrollern (3) zum Verbinden der Massenspeichereinrichtung (1) mit jeweils einem Server, wobei jeder der Bridgecontroller (3) über einen Festplattenbus physikalisch mit allen Massenspeichern (2) der Massenspeichereinrichtung (1) verbünden ist und die Massenspeicher (2) nicht direkt über einen Host-Bus Adapter eines Hostsystems ansprechbar sind, sondern über die Bridgecontroller verwaltbar und von diesen physikalisch ansprechbar sind,
**dadurch gekennzeichnet, daß** in der Massenspeichereinrichtung (1) eine erste und eine weitere gemeinsame Cache-Speichereinheit (4) vorgesehen sind, mit denen die Bridgecontroller (3) zum Abspeichern abzuspeichernder Daten und deren Stati auf die Massenspeichereinheiten (2) über ein zusätzliches Cache-Synchronisationssystem (6) der Massenspeichereinrichtung (1) in Form eines von dem Festplattenbus separaten Datenbusses umfassend mehrere ultraschnelle Einzelverbindungen verbunden sind, wobei die Bridgecontroller (3) über das Cache-Synchronisationssystem (6) an die erste und die weitere gemeinsame Cache-Speichereinheit (4) angebunden und dazu eingerichtet sind, in einem "Write-Back-Modus" zu arbeiten und die abzuspeichernden Daten über den separaten Datenbus in die erste gemeinsame Cache-Speichereinheit zu schreiben, der für jeden Bridgecontroller (3) eine Einzel-Verbindung, eine sogenannte Point-to-Point Verbindung, zu der ersten gemeinsamen Cache-Speichereinheit (4) aufweist, wobei die weitere gemeinsame Cache-Speichereinheit (4) zur permanenten Synchronisation der Speichereinheiten-Inhalte, dem sogenannten Cache-Mirroring, mit der ersten gemeinsamen Cache-Speichereinheit (4) über einen separaten Datenbus physikalisch verbunden ist,
wobei jeder gemeinsamen Cache-Speichereinheit (4) eine BBU (Battery Backup Unit) (5) zugeordnet ist, die bei einem Stromausfall die jeweilige gemeinsame Cache-Speichereinheit (4) gegen Datenverluste absichert, und die BBU (5) jeweils als internes System innerhalb der jeweiligen Cache-Speichereinheit (4) implementiert ist, und
wobei alle gemeinsamen Cache-Speichereinheiten (4) im laufenden Betrieb aus- und einbaubar sind.

2. Massenspeichereinrichtung (1) nach Anspruch 1, **dadurch gekennzeichnet, daß** das zusätzliche Cache-Synchronisationssystem (6) zur Anbindung der Bridgecoritroller (3) an die erste gemeinsame Speichereinheit (4) als passive Backplane-Verbindung ausgebildet ist.

3. Massenspeichereinrichtung (1) nach Anspruch 1 oder 2, **dadurch gekennzeichnet, daß** das zusätzliche Cache-Synchronisationssystem (6) als Switched-Fabric-Topologie ausgebildet ist.

4. Massenspeichereinrichtung (1) nach Anspruch 1, **dadurch gekennzeichnet, daß** die erste und weitere gemeinsame Cache-Speichereinheit (4) einen modularen Aufbau von Speichermodulen aufweisen und durch Stecken zusätzlicher Speichermodule oder Entfernen zum Beispiel von fehlerhaften Speichermodulen bzgl. ihrer Speicherkapazität erweiterbar oder reduzierbar sind.

5. Massenspeichereinrichtung (1) nach Anspruch 1, oder 4, **dadurch gekennzeichnet, daß** alle gemeinsamen Cache-Speichereinheiten (4) einen nicht-flüchtigen Konfigurätionsbereich aufweisen, in dem die interne Konfiguration der jeweiligen Cache-Speichereinheit (4) abgelegt ist.

6. Massenspeichereinrichtung (1) nach Anspruch 1, **dadurch gekennzeichnet, daß** die Massenspeicher (2) Festplatten sind.

7. Verfahren zum Betrieb einer Massenspeichereinrichtung (1) mit mehreren Massenspeichern (2) und mit zumindest zwei Bridgecontrollern (3) zum Verbinden der Massenspeic,hereinrichtung (1) mit jeweils einem Server, wobei über jeden der Bridgecontroller (3) alle Massenspeicher (2) der Massenspeichereinrichtung (1) ansprechbar sind und die Massenspeicher (2) nicht direkt über einen Host-Bus Adapter eines Hostsystems angesprochen werden, und mit zumindest einer ersten und einer weiteren gemeinsamen, mit den Bridgecontrollern (3) über ein Cache-Synchronisationssystem (6) der Massenspeichereinrichtung (1) verbundenen Cache-Speichereinheit (4) der Massenspeichereinrichtung (1), wobei
- alle abzuspeichernden Daten erst auf der ersten gemeinsamen Cache-Speichereinheit (4) abgespeichert werden,
- die in der ersten gemeinsamen Cache-Speichereinheit (4) gespeicherten Daten auf die Massenspeicher (2) zur Speicherung übertragen werden,
- die Bridgecontroller (3) in einem "Write-Back-Modus" betrieben werden, so dass die am Bridgecontroller (3) anliegenden abzuspeichernden Daten nicht auf einem Bridgecontroller (3) internen Speicher sondern auf der ersten gemeinsamen Cache-Speichereinheit (4) abgespeichert werden,
- die erste und die weitere gemeinsame Cache-Speichereinheit (4) über einen separaten Datenbus für eine automatische Cache-Synchronisation verbunden sind,
- die in der ersten gemeinsamen Cache-Speichereinheit (4) zu speichernden Daten auf der der ersten gemeinsamen Cache-Speichereinheit (4) zugeordneten weiteren gemeinsamen Cache-Speichereinheit (4) gespiegelt werden, wobei die weitere gemeinsame Cache-Speichereinheit (4) bei einem Ausfall der ersten gemeinsamen Cache-Speichereinheit (4) die Funktionalität der ersten gemeinsamen Cache-Speichereinheit (4) transparent und verzögerungsfrei übernimmt, und
- die Spiegelung der abzuspeichernden Daten auf der weiteren Cache-Speichereinheit (4) mittels eines einer geforderten Sicherheitsstufe entsprechenden Cache-Coherency-Algorithmus erfolgt.

8. Verfahren nach Anspruch 7,
**dadurch gekennzeichnet, daß** die Cache-Speichereinheiten (4) Speichermodule aufweisen und durch Stecken zusätzlicher Speichermodule oder Entfernen der Speichermodule bzgl. ihrer Speicherkapazität erweiterbar oder reduzierbar sind und ein Stecken bzw. Entfernen eines der Speichermodule oder ein Stecken einer zusätzlichen bzw. Entfernen einer defekten Cache-Speichereinheit (4) keinen "Cash-Flush" bewirkt und die Bridgecontroller (3) in einem "Write-Back-Modus" verbleiben.

9. Verfahren nach Anspruch 7 oder 8,
**dadurch gekennzeichnet, daß** ein Entfernen einer der Cache-Speichereinheiten (4) keinen "Cash-Flush" bewirkt und die Bridgecontroller (3) in einem "Write-Back-Modus" verbleiben, bei dem die zu speichernden Daten zuerst auf die verbleibende Cache-Speichereinheit (4) geschrieben werden und anschließend auf den Massenspeichern (2) gespeichert werden.

10. Verfahren nach Anspruch 7,
**dadurch gekennzeichnet**, daβ die erste und weitere gemeinsame Cache-Speichereinheit (4) zur Verwaltung in eine Speichersubsystem-Verwaltung eingebunden sind.

11. Verfahren nach einem der vorherigen Ansprüche,
**dadurch gekennzeichnet, daß** die in der ersten und weiteren gemeinsamen Cache-Speichereinheit (4) gespeicherten Daten gegen Fehler über Sicherungsalgorithmen zur Datenrekonstruktion abgesichert sind.

12. Verfahren nach einem der vorherigen Ansprüche,
**dadurch gekennzeichnet, daß** die abzuspeichernden Daten in der ersten und weiteren gemeinsamen Cache-Speichereinheit (4) blockweise abgespeichert werden und die Cache-Speichereinheiten (4) Selbstheilungseigenschaften aufweisen, die beim Ausfall eines Blocks bzw. bei Überschreitung eines festgelegten Fehlerniveaus die zu speichernden Daten in einem reservierten Block automatisch abbilden und den defekten Block nicht weiter verwenden.

## Claims

1. A mass memory device (1) comprising a plurality of mass memories (2) and at least two bridge controllers (3) for connecting the mass memory device (1) with in each case one server, wherein each of the bridge controllers (3) is physically connected to all mass memories (2) of the mass memory device (1) via a hard disk bus and the mass memories (2) cannot be directly addressed via a host bus adaptor of a host system, but can be managed and physically addressed via the bridge controllers,
**characterized in that**
in the mass memory device (1) a first and another common cache memory unit (4) are provided, with which the bridge controllers (3) are connected for storing data to be stored and the statuses thereof are connected on the mass memory units (2) via an additional cache synchronization system (6) of the mass memory device (1) in the form of a data bus separate from the hard disk bus and comprising multiple ultrafast single connections, wherein the bridge controllers (3) are connected to the first and the further common cache memory unit (4) via the cache synchronization system (6) and are set-up to operate in a "write-back-mode" and write the data to be stored into the first common cache storage unit via the separate data bus, which has a single connection, a so-called point-to-point-connection, to the first common cache memory unit (4) for each bridge controller (3), wherein the further common cache memory unit (4) for permanent synchronization of the memory unit contents, the so-called cache-mirroring, is physically connected to the first common memory unit (4) via a separate data bus,
wherein a battery backup unit (BBU) (5) is assigned to each common cache memory unit (4), which in the event of power failure protects the respective common cache memory unit (4) from data losses, and the BBU (5) is in each case implemented as an internal system within the respective cache memory unit (4), and wherein all common cache memory units (4) can be removed and fitted during operation.

2. The mass memory device (1) according to claim 1, **characterized in that** the additional cache synchronization system (6) is in the form of a passive backplane connection for the purpose of linking the bridge controllers (3) to the first common cache memory unit (4).

3. The mass memory device (1) according to claim 1 or 2, **characterized in that** the additional cache synchronization system (6) is in the form of a switched fabric topology.

4. The mass memory device (1) according to claim 1, **characterized in that** the first and the further common cache memory unit (4) have a modular memory module design and can be extended or reduced in terms of their storage capacity by plugging additional memory modules or removing for example faulty memory modules.

5. The mass memory device (1) according to claim 1 or 4, **characterized in that** all common cache memory units (4) have a nonvolatile configuration area which stores the internal configuration of the respective cache memory unit (4).

6. The mass memory device (1) according to claim 1, **characterized in that** the mass memories (2) are hard disks.

7. A method for operating a mass memory device (1) having a plurality of mass memories (2) and having at least two bridge controllers (3) for connecting the mass memory device (1) with in each case one server, wherein via each of the bridge controllers (3) all mass memories (2) of the mass memory device (1) can be addressed and the mass memories (2) are not directly addressed via a host bus adapter of a host system, and with at least a first and a further common cache memory unit (4) of the mass memory device (1) connected to the bridge controllers (3) via a cache synchronization system (6) of the mass memory device (1), wherein
- all data to be stored is initially stored on the first common cache memory unit (4),
- the data stored in the first common cache memory unit (4) are transferred to the mass memory (2) for the purpose of storage,
- the bridge controllers (3) are operated in a "write-back-mode" so that the data to be stored present at the bridge controller (3) are not stored on an internal memory of the bridge controller (3) but on the first common cache memory unit (4),
- the first and the further common cache memory unit (4) are connected for automatic cache synchronization via a separate data bus,
- the data to be stored in the first common cache memory unit (4) are mirrored on the further common cache memory unit (4) assigned to the first common cache memory unit (4), wherein the further common cache memory unit (4) upon a failure of the first common cache memory unit (4) assumes the functionality of the first common cache memory unit (4) in a transparent manner and without time lag, and
- the data to be stored are mirrored on the further cache memory unit (4) by means of a cache coherency algorithm which corresponds to the required security level.

8. The method according to claim 7,
**characterized in that**
the cache memory units (4) comprise memory modules and can be extended or reduced in terms of their storage capacity by plugging additional memory modules or removing the memory modules and a plugging or removal of one of the memory modules or a plugging or an addition cache memory unit (4) respectively a removal of a defective cache memory unit (4) does not cause a "cache flush" und the bridge controllers (3) remain in a "write back mode".

9. The method according to claim 7 or 8,
**characterized in that**
a removal of one of the cache memory units (4) does not cause a "cache flush" and the bridge controllers (3) remain in a write back mode", in which the data to be stored are initially written on the remaining cache memory unit (4) and subsequently stored on the mass memories (2).

10. The method according to claim 7,
**characterized in that**
the first and the further common cache memory unit (4) are incorporated in a memory subsystem manager for management purposes.

11. The method according to one of the preceding claims, **characterized in that** the data stored in the first and further common cache memory units (4) are protected against errors by means of protection algorithms for data reconstruction.

12. The method according to one of the preceding claims, **characterized in that** the data to be stored are stored in the first and further common cache memory units (4) in blocks, and the cache memory units (4) have self-restoring properties which, in the event of failure of a block or in the event of a stipulated error level being exceeded, automatically map the data to be stored in a reserved block and do not use the faulty block further.

## Revendications

1. Un dispositif de mémoire de masse (1) comprenant une multiplicité de mémoires de masse (2) et au moins deux contrôleurs de pont (3) pour relier le dispositif de mémoire de masse (1) à un serveur dans chaque cas, dans lequel chaque contrôleur de pont (3) est relié physiquement à toutes les mémoires de masse (2) du dispositif de mémoire de masse (1) à travers un bus de disque dur et les mémoires de masse (2) ne peuvent pas être adressées directement à travers un adaptateur de bus hôte d'un système hôte, mais elles peuvent être gérées et adressées physiquement à travers les contrôleurs de pont, **caractérisé en ce que**
dans le dispositif de mémoire de masse (1) une première et une autre unité de mémoire cache commune (4) sont fournies, avec lesquelles les contrôleurs de pont (3) sont reliés afin de stocker des données à être stockées et leurs statuts dans les unités de mémoire de masse (2) à travers un système de synchronisation cache supplémentaire (6) du dispositif de mémoire de masse (1) sous la forme d'un bus de données séparé du bus du disque dur et comprenant de multiples connexions unique et ultrarapide, dans laquelle les contrôleurs de pont (3) sont reliés à la première et à l'ultérieure unité de mémoire cache commune (4) à travers le système de synchronisation cache (6) et sont configurés pour fonctionner dans un mode « write back » et écrivent les données à être stockées dans la première unité de stockage cache commune à travers le premier bus de données séparé, qui possède une connexion unique, ce que l'on appelle la connexion « point-to-point » à la première unité de mémoire cache commune (4) pour chaque contrôleur de pont (3), dans lequel l'ultérieure unité de mémoire cache commune (4) pour la synchronisation permanente des contenus de l'unité de mémoire,
ce que l'on appelle le cache « miroir », est reliée physiquement à la première unité commune de mémoire (4) à travers un bus de données séparé, dans lequel à
chaque unité de mémoire cache commune (4) l'on attribue une unité de batterie de secours (BBU) (5), laquelle dans l'éventualité d'une panne de courant protège l'unité de mémoire cache commune respective (4) contre la perte de données, et la BBU (5) est, dans chaque cas, mise en oeuvre comme un système interne à l'intérieur de l'unité de mémoire cache respective (4), et dans lequel toutes les unités de mémoire cache commune (4) peuvent être démontées et incorporées pendant le fonctionnement.

2. Le dispositif de mémoire de masse (1) selon la revendication 1, **caractérisé en ce que** le système de synchronisation cache supplémentaire (6) prend la forme d'une connexion passive de fond de panier dans le but de relier les contrôleurs de pont (3) à la première unité de mémoire cache commune (4).

3. Le dispositif de mémoire de masse (1) selon la revendication 1 ou 2, **caractérisé en ce que** le système de synchronisation cache supplémentaire (6) prend la forme d'une topologie de type
« switch fabric ».

4. Le dispositif de mémoire de masse (1) selon la revendication 1, **caractérisé en ce que** la première et l'ultérieure unité de mémoire cache commune (4) ont une conception de modules de mémoire modulaire et leur capacité de stockage peut s'étendre ou se réduire en insérant des modules supplémentaires de mémoire ou en enlevant par exemple les modules de mémoire défectueux.

5. Le dispositif de mémoire de masse (1) selon la revendication 1 ou 4, **caractérisé en ce que**
toutes les unités de mémoire cache commune (4) présentent une zone de configuration non-volatile, laquelle stocke la configuration interne de l'unité de mémoire cache respective (4).

6. Le dispositif de mémoire de masse (1) selon la revendication 1, **caractérisé en ce que** les mémoires de masse (2) sont des disques durs.

7. Un procédé pour exploiter un dispositif de mémoire de masse (1) ayant une multiplicité de mémoires de masse (2) et ayant au moins deux contrôleurs de pont (3) pour relier le dispositif de mémoire de masse (1) à un serveur dans chaque cas, dans lequel chaque contrôleur de pont (3) est relié physiquement à toutes les mémoires de masse (2) du dispositif de mémoire de masse (1) à travers un bus de disque dur et les mémoires de masse (2) ne pourraient pas adressées directement à travers un adaptateur de bus hôte d'un système hôte; et à au moins une première et une ultérieure unité de mémoire cache commune (4) du dispositif de mémoire de masse (1) reliées aux contrôleurs de pont (3) à travers un système de synchronisation cache (6) du dispositif de mémoire de masse (1), dans lequel
- toutes les données à être stockées sont stockées initialement dans la première unité de mémoire cache commune (4),
- les données stockées dans la première unité de mémoire cache commune (4) sont transférées à la mémoire de masse (2) pour les stocker,
- les contrôleurs de pont (3) sont exploités dans un mode
« write back » afin que les données à être stockées et présentes dans le contrôleur de pont (3) ne soient pas stockées dans une mémoire interne du contrôleur de pont (3) mais dans la première unité de mémoire cache commune (4),
- la première et l'ultérieure unité de mémoire cache commune (4) sont reliées pour une synchronisation cache automatique à travers un bus de données séparé,
- les données à être stockées dans la première unité de mémoire cache commune (4) sont dupliquées dans l'ultérieure unité de mémoire cache commune (4) attribuée à la première unité de mémoire cache commune (4), dans laquelle l'ultérieure unité de mémoire cache commune (4) en présence d'une défaillance de la première unité de mémoire cache commune (4) prend le relais de la première unité de mémoire cache commune (4) d'une manière transparente et sans décalage de temps, et
- les données à être stockées sont dupliquées dans l'ultérieure unité de mémoire cache (4) à l'aide d'un algorithme de cohérence de cache qui correspond au niveau de sécurité demandé.

8. Le procédé selon la revendication 7,
**caractérisé en ce que**
les unités de mémoire cache (4) comprennent de modules de mémoire et leur capacité de stockage peut s'étendre ou se réduire en insérant des modules supplémentaires de mémoire ou en supprimant des modules de mémoire, et l'insertion ou l'enlèvement d'un des modules de mémoire ou l'insertion ou l'ajout d'une unité de mémoire cache (4) respectivement, une suppression d'une unité de mémoire cache défectueuse (4) ne provoque pas un « cache flush » et les contrôleurs de pont (3) restent dans le mode « write back ».

9. Le procédé selon la revendication 7 ou 8,
**caractérisé en ce que**
la suppression d'une des unités de mémoire cache (4) ne provoque pas un « cash flush » et les contrôleurs de pont (3) restent dans le mode « write back », dans lequel les données à être stockées sont initialement écrites dans l'unité de mémoire cache restante (4) et ultérieurement stockées dans les mémoires de masse (2).

10. Le procédé selon la revendication 7,
**caractérisé en ce que**
la première et l'ultérieure unité de mémoire cache commune (4) sont incorporées dans un gestionnaire d'un sous-système de mémoire à des buts de gestion.

11. Le procédé selon une des revendications précédentes,
**caractérisé en ce que** les données stockées dans la première et l'ultérieure unité de mémoire cache commune (4) sont protégées contre des erreurs à l'aide d'algorithmes de protection pour la reconstruction de données.

12. Le procédé selon une des revendications précédentes,
**caractérisé en ce que** les données à être stockées sont stockées dans la première et l'ultérieure unité de mémoire cache commune (4) en blocs, et les unités de mémoire cache (4) ont des propriétés d'auto-réparation qui, dans l'éventualité d'une erreur dans un bloc ou dans l'éventualité que le niveau d'erreur stipulé soit dépassé, recensent automatiquement les données à être stockées dans un bloc réservé et n'utilisent plus le bloc défectueux.
